# EUROPEAN PATENT SPECIFICATION

(11) **EP 1 501 215 B1**
(45) Date of publication and mention of the grant of the patent: **08.10.2008**
(21) Application number: 03720573.9
(22) Date of filing: 11.04.2003
(51) Int. Cl.: H04B 7/26, H04B 7/15, H04Q 7/20, H04B 7/005

(54) **ACCESS METHOD AND GSM REPEATER SYSTEM WITH SPECTRAL EXCHANGE BETWEEN THE 900 AND 1800 MHZ GSM WAVE FREQUENCIES**
ZUGANGSVERFAHREN UND GSM-ZWISCHENVERSTÄRKERSYSTEM MIT SPEKTRALAUSTAUSCH ZWISCHEN DEN GSM-WELLENFREQUENZEN 900 UND 1800 MHZ
PROCEDE D'ACCES ET SYSTEME DE REPETEURS POUR GSM A ECHANGE SPECTRAL ENTRE LES BANDES DE FREQUENCE GSM DE 900 ET 1800 MHZ

(30) Priority: 12.04.2002 ES 200200861
(43) Date of publication of application: 26.01.2005
(73) Proprietor: Telefonica, S.A., 28013 Madrid (ES)
(72) Inventor: CUCALA GARCIA, L., c/o Telefónica, S.A., 28043 MADRID (ES); WARZANSKYJ GARCIA, W., c/o Telefónica, S.A., 28043 MADRID (ES); LLUCH MESQUIDA, C., c/o Telefónica, S.A., 28034 MADRID (ES); IAN FILLOMORE, D., c/o Telefónica, S.A., 28029 MADRID (ES); RUIZ ARAGON, P., c/o Telefónica, S.A., 28043 MADRID (ES)
(74) Representative: Primo de Rivera y Urquijo, Jose A.
(86) International application number: PCT/ES2003/000169
(87) International publication number: WO 2003/088524

(56) References cited:
- EP-A1- 1 020 999
- EP-A2- 0 418 103
- EP-A2- 0 523 687
- US-B1- 6 373 833
- US-B1- 6 426 682

## Description

### FIELD OF APPLICATION

This invention describes an access method and GSM repeater system with espectral exchange between the 900 and 1800 MHz GSM wave frequencies

The frequency bands of 900 and 1800 MHz are assigned to the GSM cellular system of mobile communications, whereby the system does not require the operator to obtain any extra allocation of frequency bands from the competent regulatory body. Also, other spectral interchange repeater systems are already known which require spectral inversion or change in the information actually transported in the GSM channels, which is avoided by means of the system and method proposed.

### CURRENT STATE OF THE ART

The need is known for radiofrequency signal repeaters or retransmitters in diverse circumstances, such as non-direct access on the part of the terminals to the transmit/receive centres when the distance between them is excessive or intervening obstacles are present. In general, the attenuation suffered in the level of the received signal does not allow communication between them, for which reason intermediate repeaters are required through which an indirect communication is allowed.

The use is known of radiofrequency signal repeaters by means of spectral band change in many systems via radio, like for example that which has been employed for many years in television signal repeaters. In them, a transmitting centre transmits signals in a frequency band B1. This band is received by the remote repeater or retransmitter, which re-transmits the received band in another frequency band B2. The change of frequency bands avoids coupling or mutual interference between the transmitted signal and the received one. The repeater can carry out additional functions such as amplification and regeneration of the signal. It is thus achieved that remote terminals without direct access to the transmitting centre, can have access to said transmitting centre indirectly. When the communication has to be bidirectional as is the case of cellular communications, the repeater has to work in both directions of communication.

The GSM cellular system is a system with TDMA channelling, having the frequency bands of 900 and 1800 MHz assigned, which in turn are divided into several sub-bands and each one into radio channels by means of TDMA techniques. Each channel allows communication between originator and receiver. In the case of GSM, the retransmission can be made independently for each of the radio channels, although the method most employed is for complete frequency sub-bands.

The concept is known in cellular communications like GSM of a remote repeater connected via radio to another near repeater, which will be in communication with the base station or transmit/receive centre. The frequency bands used between the base station and the near repeater, and between the near and remote repeater will be different. When in the hop between the near and remote repeater, the actual frequencies assigned to the communications system are used, there exists the risk of some cellular terminals interfering in the communication between repeaters, and to avoid this, various methods are available on the market and are in use. By way of example, there are the spectrum inversion of the GSM radio channel and modification of the information transported by the GSM signal. In the spectrum inversion, the band B used by the radio channel [Fa-B/2, Fa+B/2] is inverted completely with respect to its centre point Fa, converting any frequency Fa+x into image frequency Fa-x for any value inside the band. In the modification of the information transported by the GSM signal, demodulation is required in the near repeater to modify the BCCH/SCH channel, being modulated again before being sent to the remote repeater, and in like manner in the remote repeater demodulation is required again to undo the changes made in the BCCH/SCH channel and re-modulation before being forwarded to the final remote antenna.
Spectral change is not known in the state of the art between the GSM bands of 900 and 1800 MHz without spectral inversion and using the SCH channel of the GSM signal at 900 MHz as reference frequency.

The use is not known in the state of the art of spectral displacement of the radio channels between the near and remote repeater in order to prevent interference from cellular terminals which may be using the same frequency band.

EP-A-523687 discloses a mobile telecommunication system comprising a base station connected to a public communication network, a number of relay o repeater stations and a number of mobile stations, with spectral interchange between said relay stations, and using a first band to communicate with the network and a second band to communicate between said relays. According to this invention the mobile stations monitors the strength of electric field of the broadcast from the base station and the relay station and selects the station to which the mobile terminal communicates in response to said strength.

### DESCRIPTION OF THE INVENTION

The present invention discloses the architecture of a repeater system for GSM, with spectral interchange between the GSM frequency bands of 900 and 1800 MHz, and which is constituted by a GSM cellular base station, one or several near repeaters, one or several remote repeaters and GSM cellular remote terminals. Also, a complete system typically includes the presence of several base stations and both near and remote terminals.

The GSM base station operates in the 900 MHz frequency band, giving GSM cellular communications service to the near terminals inside its coverage area. It will also be connected to one or several near repeaters in the 900 MHz frequency band by connection via cable.

In turn, a near repeater will communicate with one or several remote repeaters in the 1800 MHz band via radio, forwarding in the downlink direction the radio channels transmitted by the base station to the remote repeater, and receiving in the uplink direction the radio channel or radio channels from the remote repeater and forwarding them to the base station.

Each remote repeater will communicate with a near repeater in the 1800 MHz band and with the remote terminals in the 900 MHz band. In the downlink direction, the radio channels coming from the near repeaters in the 1800 MHz band are translated to the 900 MHz band and sent to the remote terminals in the 900 MHz band. In the uplink direction, the radio channels transmitted by the remote terminals in the 900 MHz band are forwarded to the near repeaters in the 1800 MHz band.

The remote terminals will communicate with the base station through the repeater system. From the functional point of view, the remote terminal will communicate with the remote repeater like any other near terminal directly connected to the base station.

Among the main characteristics of the repeater system for GSM with spectral interchange between the GSM frequency bands of 900 and 1800 MHz, are:
- The absence of inversion in the frequency bands of the radio channels in the spectral interchange between the bands of 900 and 1800 MHz.
- The use of the SCH channel for the extraction of the reference frequency used in the spectral interchange between the bands of 900 and 1800 MHz.
- To prevent any terminal operating in the GSM band of 1800 MHz from interfering in the communication between the near and remote repeaters, an object of this invention is the displacement of the channelling of this band assigned by ETSI in the GSM standard by a small amount (e.g. 100 kHz), which allows continuing inside the GSM frequency band of 1800 MHz according to ETSI standards and prevents intruding terminals from interfering in the communication between the repeaters.
- In the event of there being several remote repeaters, an object of this invention is the incorporation of a transmission cut-off mechanism in the uplink direction in the communication between the remote and near repeaters in the 1800 MHz band. The cutting-off of a radio channel will take place when the level of the signal to be repeated in the 900 MHz band does not exceed a threshold preset by the operator.
- All the necessary frequency changes in both the near and remote repeaters, are carried out by means of frequency synthesizers which use as master frequency that employed by the FCCH channel. The accuracy of these synthesizers has to be quite high so that the system works correctly (e.g. 0.05 ppm).
- Both near and remote repeaters incorporate a radio modem and a local control interface, through which an external management system can select the transmit and receive frequencies of the repeaters.

### BRIEF DESCRIPTION OF THE DRAWINGS

Figure 1 shows the architecture of the repeater system for GSM with spectral interchange between the GSM frequency bands of 900 and 1800 MHz.
Figure 2 shows the architecture of the radiofrequency repeater module located in the near repeater of the base station using spectral interchange between the GSM bands of 900 and 1800 MHz.
Figure 3 shows the architecture of the radiofrequency repeater module located in the remote repeater of the base station using spectral interchange between the GSM bands of 900 and 1800 MHz.
Figure 4 shows the architecture of the control module of multiple near repeaters of the base station.
Figure 5 shows the architecture of the control module of a remote repeater of the base station.
Figure 6 shows the architecture of the high-performance synchronisation extractor element which generates an intermediate frequency signal from the FCCH channel of the GSM frame and a minimum phase error algorithm.

### DETAILED DESCRIPTION OF THE INVENTION

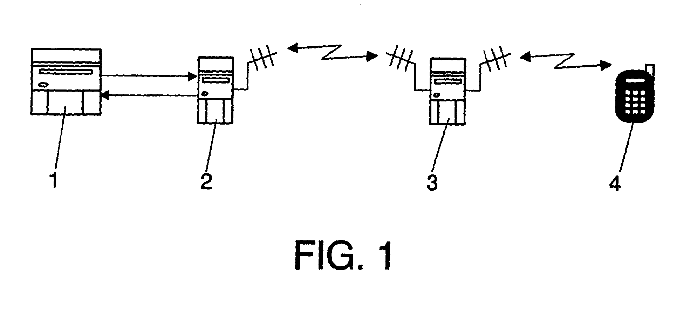

Figure 1 shows the entities involved in the architecture of the repeater system for GSM with spectral interchange between the GSM frequency bands of 900 and 1800 MHz: GSM cellular base station (1), near repeater (2), remote repeater (3) and GSM cellular remote terminal (4).

There can be one or several near repeaters, remote repeaters and remote terminals. A complete system includes typically the presence of several base stations and both near and remote terminals. All this is not detailed in figure 1 as it is unnecessary from the point of view of describing the invention.

The GSM base station (1) operates in the frequency band of 900 MHz.

Typically it will have sectorial antennas in order to increase the efficiency of the system as to traffic and number of near terminals supported simultaneously. This base station (1) will have near terminals which will be connected directly via radio to said base station (1), and it will also be connected to one or several near repeaters (2) in the 900 MHz band by means of connection via cable.

The near repeater (2) will communicate with the base station (1) in the 900 MHz band via cable and with the remote repeater (3) (one or several remote repeaters) in the 1800 MHz band via radio. The near repeater (2) will receive in the downlink direction the radio channels transmitted by the base station (1) and will forward them to the remote repeater (3). It includes the BCCH, FCCH and SCH channels necessary for the synchronisation of the remote terminals (4) and for the actual operation of the near repeaters (2). Typically, the communication with the base station (1) and with the remote repeater (3) will be carried out using directional antennas to increase efficiency in the communication. In the uplink direction, the near repeater (2) will receive the radio channel or radio channels from the remote repeater (3) and will forward them to the base station (1).

The remote repeater (3) will communicate with the near repeater (2) in the 1800 MHz band and with the remote terminals (4) in the 900 MHz band. The remote repeaters (3) will typically use directional antennas for communication with the near repeaters (2) and sectorial antennas for communication with the remote terminals (4). In the downlink direction, the radio channels coming from the near repeaters in the 1800 MHz band are translated to the 900 MHz band and sent to the remote terminals (4). This includes the BCCH, FCCH and SCH channels necessary for the synchronisation of the remote terminals (4) and for the actual operation of the remote repeaters (3). In the uplink direction, the radio channels transmitted by the remote terminals (4) in the 900 MHz band are forwarded to the near repeaters in the 1800 MHz band.

The remote terminals (4) will communicate with the remote repeater (3) in the 900 MHz band. In fact they will communicate with the base station (1) through the repeater system. From the functional point of view, the remote terminal (4) will communicate with the remote repeater like any other near terminal directly connected to the base station (1). For the correct operation of the system, the BCCH, FCCH and SCH channels are radiated by the remote repeater (3), which were originally transmitted by the base station (1) and forwarded by the near repeater (2).

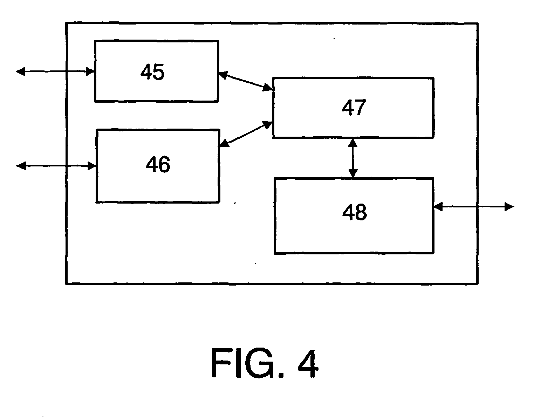

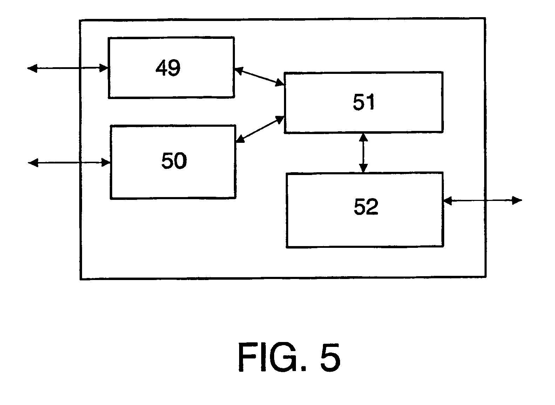

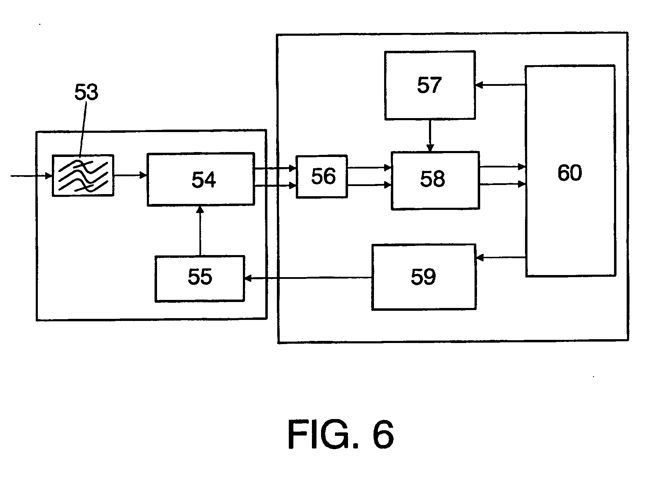

Among the main characteristics of the repeater system for GSM with spectral interchange between the GSM frequency bands of 900 and 1800 MHz, are:
- The absence of inversion in the frequency bands of the radio channels in the spectral interchange between the bands of 900 and 1800 MHz.
- The use of the SCH channel for the extraction of the reference frequency used in the spectral interchange between the bands of 900 and 1800 MHz.
- To prevent any terminal operating in the GSM band of 1800 MHz from interfering in the communication between the near (2) and remote (3) repeaters, an object of this invention is the displacement of the channelling of this band assigned by ETSI in the GSM standard by a small amount (e.g. 100 kHz), which allows continuing inside the GSM frequency band of 1800 MHz according to ETSI standards and prevents intruding terminals from interfering in the communication between the repeaters.
- In the event of there being several remote repeaters (3), an object of this invention is the incorporation of a transmission cut-off mechanism in the uplink direction in the communication between the remote (3) and near (2) repeaters in the 1800 MHz band. The cutting-off of a radio channel will take place when the level of the signal to be repeated in the 900 MHz band does not exceed a threshold preset by the operator.
- All the necessary frequency changes in the repeaters both near (2) and remote (3), are carried out by means of frequency synthesizers which use as master frequency that employed by the FCCH channel. The accuracy of these synthesizers has to be quite high so that the system works correctly (e.g. 0.1 ppm). Figure 6 shows this element in more detail.
- Both near (2) and remote (3) repeaters incorporate a radio modem and a local control interface, through which an external management system can select the transmit and receive frequencies of the repeaters. Particulars of the control modules for the near (2) and remote (3) repeaters are shown in detail in figures 4 and 5 respectively.

In figure 1, the letters A to C denote the interfaces between the diverse entities. These interfaces are:
A- Interface between the base station (1) and the near repeaters (2). This interface is via radio in the GSM band of 900 MHz in accordance with the ETSI standards.
B- Interface between the near repeaters (2) and the remote repeaters (3). This interface is via radio in the GSM band of 1800 MHz in accordance with the ETSI standards.
C- Interface between the remote repeaters (3) and the remote terminals (4). This interface is via radio in the GSM band of 900 MHz in accordance with the ETSI standards.

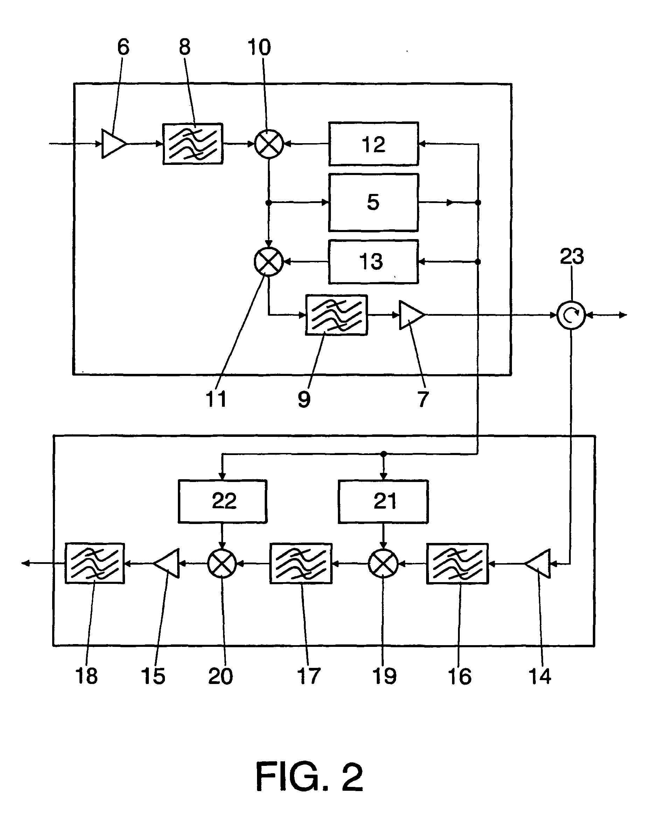

Figure 2 shows the main entities of the preferred architecture of the radiofrequency repeater module located in the near repeater of the base station using spectral interchange between the GSM bands of 900 and 1800 MHz. In the downlink subunit: low noise amplifier of GSM line at 900 MHz (6), GSM band filter at 900 MHz (8), first mixer (10), first synthesizer (12), synchronisation extractor (5), second mixer (11), second synthesizer (13), GSM band filter at 1800 MHz (9) and GSM amplifier at 1800 MHz (7). In the uplink subunit: GSM low noise amplifier at 1800 MHz (14), GSM band filter at 1800 MHz (16), first mixer (19), first synthesizer (21), intermediate band filter (17), second mixer (20), second synthesizer (22), GSM band filter at 900 MHz (18) and GSM line amplifier at 900 MHz (18). Other modules: GSM duplexer at 1800 MHz (23).

Other modules are not detailed in this figure, such as the 1800 MHz antennas nor the control module of the near repeater (2). This last item is detailed in figure 4.

In the downlink subunit a single GSM channel is received via cable from the base station (1) in the 900 MHz band, which after mixing (10) with a first local oscillator (12) is converted into an intermediate frequency signal. This point is that employed for synchronisation extraction (5), generating a reference clock signal (e.g. 13 MHz) both for the downlink and uplink subunit. The intermediate frequency signal is again mixed (11) with the signal of a second oscillator (13) to obtain the GSM signal at 1800 MHz which will be transmitted to the remote repeater (3).

In a similar way, in the uplink subunit a GSM channel is received from the remote repeater (3) in the 1800 MHz band, which after mixing (19) with a first local oscillator (21) is converted into an intermediate frequency signal. The intermediate frequency signal is again mixed (20) with a second oscillator (22) to obtain the GSM signal at 900 MHz which will be transmitted via cable to the base station (1).

It is noteworthy that all the synthesizers use as reference signal that generated by the synchronisation extractor detailed in the downlink subunit, whereby the frequency accuracy of all of them can be assured.

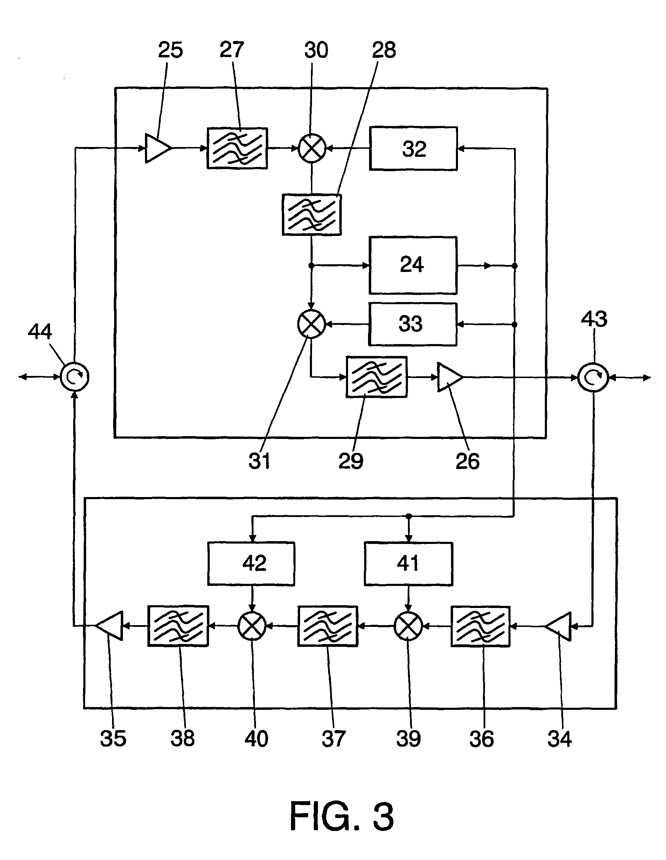

Figure 3 shows the architecture of the radiofrequency repeater module located in the remote repeater of the base station using spectral interchange between the GSM bands of 900 and 1800 MHz. In the downlink subunit: GSM low noise amplifier at 1800 MHz (25), GSM band filter at 1800 MHz (27), first mixer (30), first synthesizer (32), intermediate band filter (28), synchronisation extractor (24), second mixer (31), second synthesizer (33), GSM band filter at 900 MHz (29) and GSM amplifier at 900 MHz (26). In the uplink subunit: GSM low noise amplifier at 900 MHz (34), GSM band filter at 900 MHz (36), first mixer (39), first synthesizer (41), intermediate band filter (37), second mixer (40), second synthesizer (42), GSM band filter at 1800 MHz (38) and GSM amplifier at 1800 MHz (35). Other modules: GSM duplexer at 900 MHz (43) and GSM duplexer at 1800 MHz (44).

Other modules are not detailed in this figure, such as the 900 and 1800 MHz antennas nor the control module of the remote repeater (3). This last item is detailed in figure 5.

In the downlink subunit a single GSM channel is received via radio from the near repeater (2) in the 1800 MHz band, which after mixing (30) with a first local oscillator (32) is converted into an intermediate frequency signal. This point is that employed for synchronisation extraction (24), generating a reference clock signal (e.g. 13 MHz) both for the downlink and uplink subunit. The intermediate frequency signal is again mixed (31) with the signal of a second oscillator (33) to obtain the GSM signal at 900 MHz which will be transmitted by remote repeater (3).

In a similar way, in the uplink subunit a GSM channel is received from the remote terminals (4) in the 900 MHz band, which after mixing (39) with the signal of a first local oscillator (41) is converted into an intermediate frequency signal. The intermediate frequency signal is again mixed (40) with the signal of a second oscillator (42) to obtain the GSM signal at 1800 MHz which will be transmitted via radio to the near repeaters (2).

It is noteworthy that all the synthesizers use as reference signal that generated by the synchronisation extractor detailed in the downlink subunit, whereby the frequency accuracy of all of them can be assured.

Figure 4 shows the entities of the architecture of the control module of multiple near repeaters of the base station: GSM modem (45), local interface module (46), RS-485 interface module (48) and microprocessor (47).

The control module allows the simultaneous control of up to 32 near repeaters (2) by means of a standard bus like for example RS-485. The control module carries out the communication with external devices through two interfaces, one local to a personal computer and another through a GSM modem using for this the GSM short message service.

Figure 5 shows the entities of the architecture of the control module of a remote repeater of the base station: GSM modem (49), local interface module (50), interface module with RF antenna module (52) and microprocessor (51).

The control module allows control of a single remote repeater (3). The control module carries out the communication with external devices through two interfaces, one local to a personal computer and another through a GSM modem using for this the GSM short message service.

Figure 6 shows the entities of the architecture of the high-performance synchronisation extractor element which generates an intermediate frequency signal from the FCCH channel of the GSM frame and an algorithm of minimum phase error. GSM demodulator: band-pass intermediate frequency filter (53), amplifier and I/Q demodulator (54) and synthesizer (55). Base band processing module: A/D converters (56), additional logic (57, 58 and 59) and digital signal processor (60).

The purpose of the synchronisation extractor module is to obtain a reference signal at 13 MHz synchronized to the FCCH channel of the GSM frame with a high accuracy better than 0.05 ppm. This reference signal is used by all the synthesizers of each local (2) or remote (3) repeater, generating all those necessary frequencies. The synchronisation extractor module allows the necessary accuracy in frequency to be maintained without having to use local oscillators (synthesizers) of very high accuracy (expensive).

The GSM demodulator will demodulate the intermediate frequency signal by means of a synthesizer and an I/Q demodulator, obtaining the in-phase and quadrature GSM base band analogue components.

The base band processing module incorporates a digital signal processor (DSP) which will handle the in-phase and quadrature GSM base band analogue data received after being converted to digital format by means of the corresponding analogue/digital (A/D) converters. The digital processor will control the synthesizer of the demodulator for the purpose of generating the reference signal in synchronisation with the FCCH channel.

### DEFINITIONS AND ABBREVIATIONS

- A/D: Analogue to digital converter.
- BCCH: Broadcast control channel in GSM. Channel multicasting from the base station to all the terminals of its coverage area.
- DSP: Digital signal processor.
- ETSI: European telecommunications standards institute.
- FCCH: Frequency control channel in GSM.
- GSM: Cellular radiofrequency communications system standardized and regulated by ETSI (Global System for Mobile communication).
- kHz: Kilohertz. Unit of measurement of electric frequency.
- MHz: Megahertz. Unit of measurement of electric frequency.
- ppm: Parts per million. Employed typically to measure the accuracy of frequency synthesizers.
- SCH: Synchronisation channel in GSM.
- TDMA: Time division multiple access. System used to separate the different user data channels.

## Claims

1. Repeater system for GSM, including:
- at least one GSM base station (1),
- at least one near repeater (2),
- at least one remote repeater (3),
- near and remote cellular terminals (4),
wherein said base station (1) and said near repeater (2) are adapted for communicating between them and with said near cellular terminals (4) in the 900 MHz band, said remote repeater (3) is adapted for communicating with said remote cellular terminals (4) in the 900 MHz band, and said near (2) and remote (3) repeaters are adapted to carry out a spectral interchange between the GSM bands of 900 and 1800 MHz, to communicate between them in the 1800 MHz band, said repeater system including means for preventing any terminal operating in the GSM band of 1800 MHz from interfering in the communication between the near (2) and the remote (3) repeaters, **characterized in that** said preventing means include a management system that carry out a spectral displacement of the radio channels in the 1800 MHz band used in the communication between near (2) and remote (3) repeaters.

2. Repeater system according to claim 1, **characterized in that** said spectral displacement comprises a displacement of the channelling of said GSM band of 1800 MHz by a small amount allowing to continue inside the GSM frequency band of 1800 MHz according to ETSI standards.

3. Repeater system according to claim 2, **characterized in that** said small amount of displacement with regard to the central frequency of the GSM band is approximately of 100 kHz.

4. Repeater system according to claim 1, **characterized in that** each of said at least one near (2) and remote (3) repeaters is further adapted for using the SCH channel for the extraction of the reference frequency used in the spectral interchange between the bands of 900 and 1800 MHz. and without spectral inversion.

5. Repeater system according to any of the claims 1 to 4, **characterized in that** it further comprises a synchronisation extractor module including a GSM demodulator associated to a base band processing unit and which generates an intermediate frequency signal based on the FCCH channel of the GSM frame using an algorithm of minimum phase error.

6. Repeater system according to claim 5, **characterized in that** it comprises local oscillators (12, 13, 32, 33) for doing all the necessary frequency changes in both near (2) and remote (3) repeaters and **in that** said local oscillators (12, 13, 32, 33) are adapted to use as master frequency the one employed by the FCCH channel.

7. Repeater system according to any of the previous claims, **characterized by** a mechanism for cutting off transmission of the radio signal in the near (2) and remote (2) repeaters when the corresponding input signal is below a threshold adjustable by an operator.

8. Repeater system according to claim 1, **characterized in that** each of said at least one near and remote repeaters (2, 3) comprise a radio modem (45) and a local control interface module (46) through which said management system can select the transmitted and received frequencies of said at least one near and remote repeaters (2, 3).

9. Repeater system according to any of previous claims, **characterized in that** in integrates a control module of multiple near repeaters of the base station.

10. Repeater system according to any of the previous claims **characterized in that** it integrates a remote repeater control module of the base station.

11. Access method of a system for GSM, including:
- at least one GSM base station (1),
- at least one near repeater (2),
- at least one remote repeater (3),
- near and remote cellular terminals (4),
wherein said base station (1) and said near repeater (2) are adapted for communicating between them and with said near cellular terminals (4) in the 900 MHz band, said remote repeater (3) is adapted for communicating with said remote cellular terminals (4) in the 900 MHz band, and said near (2) and remote (3) repeaters are adapted to carry out a spectral interchange between the GSM bands of 900 and 1800 MHz, to communicate between them in the 1800 MHz band, and said method preventing any terminal operating in the GSM band of 1800 MHz from interfering in the communication between the near (2) and the remote (3) repeaters of said repeater system, **characterized in that** said prevention is obtained by carrying out a spectral displacement of the radio channels in the 1800 MHz band used in the communication between near (2) and remote (3) repeaters.

12. Access method according to claim 11, **characterized in that** said spectral displacement comprises a displacement of the channelling of said GMS band of 1800 MHz by a small amount allowing to continue inside the GSM frequency band of 1800 MHz according to ETSI standards.

13. Access method according to claim 12, **characterized in that** said small amount of displacement with regard to the central frequency of the GSM band is of 100 kHz

14. Access method according to claim 11, **characterized in that** the SCH channel is used for the extraction of a reference frequency that is used in the spectral interchange between the bands of 900 and 1800 MHz. and without spectral inversion.

15. Access method according to any of the claims 11 to 14, **characterized in that** it further comprises generate an intermediate frequency signal based on the FCCH channel of the GSM frame using an algorithm of minimum phase error.

16. Access method according to claim 15, **characterized by** using local oscillators for doing all the necessary frequency changes in the repeaters, both near and remote and in that said synthesizers use as master frequency the one employed by the FCCH channel.

17. Access method according to any of the previous claims, **characterized by** a cutting off transmission of the radio signal in the repeaters when the corresponding input signal is below a threshold adjustable by an operator.

18. Access method according to any of previous claims, **characterized by** performing an external management for selecting the transmitted and received frequencies of the said at least one near and remote repeaters (2, 3).

19. Access method according to claim 18, **characterized in that** communication of said repeaters (2, 3) with said external management system is done through a radio modem (45) and a local control interface module (46).

## Patentansprüche

1. GSM-Repeater-System, welches beinhaltet:
- zumindest eine GSM-Basisstation (1),
- zumindest einen nahen Repeater (2),
- zumindest einen Remote-Repeater (3),
- nahe und ferne Cellular Terminals (4),
bei welchem die genannte Basisstation (1) und der genannte nahe Repeater (2) zur Kommunikation untereinander und mit den genannten nahen Cellular Terminals (4) in dem 900 MHz Band angepasst sind, wobei der genannte Remote-Repeater (3) zur Kommunikation mit den genannten fernen Cellular Terminals (4) in dem 900 MHz-Band angepasst ist, und die genannten nahen (2) und Remote-Repeater (3) zur Durchführung eines spektralen Austauschs zwischen den 900- und 1800 MHz-GSM-Bändern angepasst sind, um untereinander in dem 1800 MHz-GSM-Band zu kommunizieren, wobei das genannte Repeater-System Mittel enthält, um zu verhindern, das jegliches in dem 1800 MHz-GSM-Band arbeitende Terminal die Kommunikation zwischen den nahen (2) und den Remote-Repeatern (3) stört, **dadurch gekennzeichnet, dass** die genannten Verhinderungsmittel ein Managementsystem beinhalten, das eine Spektralverschiebung der Funkkanäle in dem 1800 MHz-Band durchführt, welches bei der Kommunikation zwischen nahen (2) und Remote-Repeatern (3) verwendet wird.

2. Repeater-System nach Anspruch 1, **dadurch gekennzeichnet, dass** die genannte Spektralverschiebung eine Verschiebung der Kanalbildung des genannten GSM-Bandes von 1800 MHz um einen kleinen Betrag umfasst, was die Fortführung innerhalb des 1800 MHz-GSM-Frequenzbandes gemäß den ETSI-Standards ermöglicht.

3. Repeater-System nach Anspruch 2, **dadurch gekennzeichnet, dass** der genannte kleine Verschiebungsbetrag in Bezug auf die Zentralfrequenz des GSM-Bandes ungefähr 100 kHz beträgt.

4. Repeater-System nach Anspruch 1, **dadurch gekennzeichnet, dass** desweiteren jeder der zumindest einen nahen (2) und Remote-Repeatern (3) zur Verwendung des SCH-Kanales zur Extraktion der Referenzfrequenz angepasst ist, die in dem spektralen Austausch zwischen den 900- und 1800 MHz-Bändern und ohne spektrale Inversion verwendet wird.

5. Repeater-System nach einem der Ansprüche 1 bis 4, **dadurch gekennzeichnet, dass** es desweiteren ein Synchronisationsextraktormodul umfasst, das einen GSM-Demodulator beinhaltet, der einer Basisbandverarbeitungseinheit zugeordnet ist, und welcher ein auf dem FCCH-Kanal des GSM-Rahmens basierendes Zwischenfrequenzsiganl unter Verwendung eines Algorithmuses mit einem minimalen Phasenfehler erzeugt.

6. Repeater-System nach Anspruch 5, **dadurch gekennzeichnet, dass** es lokale Oszillatoren (12, 13, 32, 33) zur Tätigung aller nötigen Frequenzänderungen sowohl in den nahen (2) als auch in den Remote-Repeatern (3) umfasst, und dass die genannten lokalen Oszillatoren (12, 13, 32, 33) dazu angepasst sind, um als Masterfrequenz die von dem FCCH-Kanal Benutzte zu verwenden.

7. Repeater-System nach einem der vorherigen Ansprüche, **gekennzeichnet durch** einen Mechanismus zum Abschalten der Übertragung des Funksignals in den nahen (2) und Remote-Repeatern (3), wenn das entsprechende Eingangssignal sich unterhalb eines **durch** einen Betreiber einstellbaren Schwellenwertes befindet.

8. Repeater-System nach Anspruch 1, **dadurch gekennzeichnet, dass** jeder der zumindest einen nahen und Remote-Repeatern (2, 3) ein Funkmodem (45) und ein lokales Kontrollschnittstellenmodul (46) umfasst, durch welche das genannte Managementsystem die übertragenen und empfangenen Frequenzen der genannten zumindest einen nahen und Remote-Repeater (2, 3) auswählen kann.

9. Repeater-System nach einem der vorherigen Ansprüche, **dadurch gekennzeichnet, dass** es ein Kontrollmodul von mehreren nahen Repeatern der Basisstation enthält.

10. Repeater-System nach einem der vorherigen Ansprüche, **dadurch gekennzeichnet, dass** es ein Remote-Repeater-Kontrollmodul der Basisstation enthält.

11. Zugangsverfahren eines GSM-Systems, welches beinhaltet:
- zumindest eine GSM-Basisstation (1),
- zumindest einen nahen Repeater (2),
- zumindest einen Remote-Repeater (3),
- nahe und ferne Cellular Terminals (4),
bei welchem die genannte Basisstation (1) und der genannte nahe Repeater (2) zur Kommunikation untereinander und mit den genannten nahen Cellular Terminals (4) in dem 900 MHz-Band angepasst sind, wobei der genannte Remote-Repeater (3) zur Kommunikation mit den genannten fernen Cellular Terminals (4) in dem 900 MHz-Band angepasst ist, und die genannten nahen (2) und Remote-Repeater (3) zur Durchführung eines spektralen Austauschs zwischen den 900- und 1800 MHz-Bändern angepasst sind, um untereinander in dem 1800 MHz-Band zu kommunizieren, und wobei das genannte Verfahren jegliches in dem 1800 MHz-GSM-Band arbeitendes Terminal daran hindert, die Kommunikation zwischen den nahen (2) und den Remote-Repeatern (3) des genannten Repeater-Systems zu stören, **dadurch gekennzeichnet, dass** die genannte Verhinderung durch die Durchführung einer Spektralverschiebung der Funkkanäle in dem 1800 MHz-Band erhalten wird, das bei der Kommunikation zwischen den nahen (2) und den Remote-Repeatern (3) verwendet wird.

12. Zugangsverfahren nach Anspruch 11, **dadurch gekennzeichnet, dass** die genannte Spektralverschiebung eine Verschiebung der Kanalbildung des genannten 1800 MHz-GSM-Bandes um einen kleinen Betrag umfasst, welcher die Fortführung innerhalb des 1800 MHz-GSM-Frequenzbandes gemäß den ETSI-Standards ermöglicht.

13. Zugangsverfahren nach Anspruch 12, **dadurch gekennzeichnet, dass** der genannte kleine Verschiebungsbetrag in Bezug auf die Zentralfrequenz des GSM-Bandes 100 kHz beträgt.

14. Zugangsverfahren nach Anspruch 11, **dadurch gekennzeichnet, dass** der SCH-Kanal zur Extraktion einer Referenzfrequenz verwendet wird, die in dem spektralen Austausch zwischen den 900- und 1800 MHz-Bändern und ohne spektrale Inversion verwendet wird.

15. Zugangsverfahren nach einem der Ansprüche 11 bis 14, **dadurch gekennzeichnet, dass** es desweiteren die Erzeugung eines auf dem FCCH-Kanal des GSM-Rahmens basierenden Zwischenfrequenzsignals unter Verwendung eines Algorithmuses mit einem minimalen Phasenfehler umfasst.

16. zugangsverfahren nach Anspruch 15, **gekennzeichnet durch** die Verwendung von lokalen Oszillatoren zur Tätigung aller nötigen Frequenzänderungen in den Repeatern, sowohl in den nahen, als auch in den Remote-Repeatern, und dass die genannten Synthesizer als Masterfrequenz die von dem FCCH-Kanal Benutzte verwendet.

17. Zugangsverfahren nach einem der vorherigen Ansprüche, **gekennzeichnet durch** ein Abschalten der Übertragung des Funksignals in den Repeatern, wenn das entsprechende Eingangssignal sich unterhalb eines von einem Betreiber einstellbaren Schwellenwertes befindet.

18. Zugangsverfahren nach einem der vorherigen Ansprüche, **gekennzeichnet durch** das Ausführen eines externen Managements zum Auswählen der übertragenen und empfangenen Frequenzen der genannten zumindest einen nahen und Remote-Repeater (2, 3).

19. Zugangsverfahren nach Anspruch 18, **dadurch gekennzeichnet, dass** die Kommunikation der genannten Repeater (2, 3) mit dem genannten externen Managementsystem durch ein Funkmodem (45) und einem lokalen Kontrollschnittstellenmodul (46) getätigt wird.

## Revendications

1. Système de répéteurs pour GSM, incluant :
au moins une station de base GSM (1),
au moins un répéteur proche (2),
au moins un répéteur distant (3),
des terminaux cellulaires proches et distants (4),
dans lequel ladite station de base (1) et ledit répéteur proche (2) sont adaptés à communiquer entre eux et avec lesdits terminaux cellulaires (4) dans la bande de 900 MHz, ledit répéteur proche (3) est adapté à communiquer avec lesdits terminaux cellulaires distants (4) dans la bande de 900 MHz, et lesdits répéteurs proches (2) et distants (3) sont adaptés à mener à terme un échange spectral entre les bandes GSM de 900 et 1800 MHz, pour communiquer entre eux dans la bande de 1800 MHz, ledit système de répéteurs incluant des moyens pour éviter que tout terminal opérant dans la bande GSM de 1800 MHz interfère dans la communication entre les répéteurs proches (2) et distants (3), **caractérisé en ce que** lesdits moyens de prévention incluent un système de gestion qui mène à terme un déplacement spectral des canaux radioélectriques dans la bande de 1800 MHz utilisée dans la communication entre les répéteurs proches (2) et distants (3).

2. Système de répéteurs selon la revendication 1, **caractérisé en ce que** ledit déplacement spectral comprend un déplacement de la répartition de voies de ladite bande GSM de 1800 MHz par une petite quantité permettant de continuer au sein de la bande de fréquence GSM de 1800 MHz selon les normes ETSI.

3. Système de répéteurs selon la revendication 2, **caractérisé en ce que** ladite petite quantité de déplacement par rapport à la fréquence centrale de la bande GSM est d'environ 100 kHz.

4. Système de répéteurs selon la revendication 1,
**caractérisé en ce que** chacun desdits au moins un répéteur proche (2) et distant (3) est adapté, en outre, à utiliser le canal SCH pour l'extraction de la fréquence de référence utilisée dans l'échange spectral entre les bandes de 900 et 1800 MHz, et sans inversion spectrale.

5. Système de répéteurs selon l'une quelconque des revendications 1 à 4, **caractérisé en ce qu'**il comprend, en outre, un module extracteur de synchronisation incluant un démodulateur GSM associé à une unité de traitement de bande de base et qui génère un signal de fréquence intermédiaire basée sur le canal FCCH de la trame GSM utilisant un algorithme d'erreur de phase minimale.

6. Système de répéteurs selon la revendication 5, **caractérisé en ce qu'**il comprend des oscillateurs locaux (12, 13, 32, 33) pour faire tous les changements de fréquence nécessaires aussi bien dans les répéteurs proches (2) qu'distants (3) et **en ce que** lesdits oscillateurs locaux (12, 13, 32, 33) sont adaptés à utiliser comme fréquence pilote celle employée par le canal FCCH.

7. Système de répéteurs selon l'une quelconque des revendications précédentes, **caractérisé par** un mécanisme pour couper la transmission du signal radio dans les répéteurs proches (2) et distants (3) lorsque le signal d'entrée correspondant se trouve sous un seuil ajustable par un opérateur.

8. Système de répéteurs selon la revendication 1, **caractérisé en ce que** chacun desdits au moins un répéteur proche et distant (2, 3) comprennent un modem radio (45) et un module d'interface de contrôle locale (46) à travers lequel ledit système de gestion peut sélectionner les fréquences transmises et reçues desdits au moins un répéteur proche et distant (2, 3).

9. Système de répéteurs selon l'une quelconque des revendications précédentes, **caractérisé en ce qu'**il intègre un module de contrôle de multiples répéteurs proches de la station de base.

10. Système de répéteurs selon l'une quelconque des revendications précédentes **caractérisé en ce qu'**il intègre un module de contrôle de répéteurs distants de la station de base.

11. Procédé d'accès d'un système pour GSM, incluant :
au moins une station de base GSM (1),
au moins un répéteur proche (2),
au moins un répéteur distant (3),
des terminaux cellulaires proches et distants (4),
dans lequel ladite station de base (1) et ledit répéteur proche (2) sont adaptés à communiquer entre eux et avec lesdits terminaux cellulaires (4) dans la bande de 900 MHz, ledit répéteur proche (3) est adapté à communiquer avec lesdits terminaux cellulaires distants (4) dans la bande de 900 MHz, et lesdits répéteurs proches (2) et distants (3) sont adaptés à mener à terme un échange spectral entre les bandes GSM de 900 et 1800 MHz pour communiquer entre eux dans la bande de 1800 MHz, et ledit procédé évitant que tout terminal opérant dans la bande GSM de 1800 MHz interfère dans la communication entre les répéteurs proches (2) et distants (3) dudit système de répéteurs, **caractérisé en ce que** ladite prévention est obtenue en menant à terme un déplacement spectral des canaux radioélectriques dans la bande de 1800 MHz utilisée dans la communication entre les répéteurs proches (2) et distants (3).

12. Procédé d'accès selon la revendication 11, **caractérisé en ce que** ledit déplacement spectral comprend un déplacement de la répartition de voies de ladite bande GSM de 1800 MHz par une petite quantité permettant de continuer au sein de la bande de fréquence GSM de 1800 MHz selon les normes ETSI.

13. Procédé d'accès selon la revendication 12, **caractérisé en ce que** ladite petite quantité de déplacement par rapport à la fréquence centrale de la bande GSM est d'environ 100 kHz.

14. Procédé d'accès selon la revendication 11, **caractérisé en ce que** le canal SCH est utilisé pour l'extraction d'une fréquence de référence qui est utilisée dans l'échange spectral entre les bandes de 900 et 1800 MHz, et sans inversion spectrale.

15. Procédé d'accès selon l'une quelconque des revendications 11 à 14, **caractérisé en ce qu'**il comprend, en outre, la génération d'un signal de fréquence intermédiaire basée sur le canal FCCH de la trame GSM utilisant un algorithme d'erreur de phase minimale.

16. Procédé d'accès selon la revendication 15, **caractérisé par** l'utilisation des oscillateurs locaux pour faire tous les changements de fréquence nécessaire dans les répéteurs aussi bien proches qu*'*distants et en ce que lesdits synthétiseurs utilisent comme fréquence pilote celle employée par le canal FCCH.

17. Procédé d'accès selon l'une quelconque des revendications précédentes, **caractérisé par** une transmission de coupure du signal radio dans les répéteurs lorsque le signal d'entrée correspondant se trouve sous un seuil ajustable par un opérateur.

18. Procédé d'accès selon l'une quelconque des revendications précédentes, **caractérisé par** la mise en oeuvre d'une gestion externe pour sélectionner les fréquences transmises et reçues desdits au moins un répéteur proche et distant (2, 3).

19. Procédé d'accès selon la revendication 18, **caractérisé en ce que** la communication desdits répéteurs (2, 3) avec ledit système de gestion externe est faite à travers un modem radio (45) et un module d'interface de contrôle local (46).
